# EUROPEAN PATENT SPECIFICATION

(11) **EP 0 389 957 B1**
(45) Date of publication and mention of the grant of the patent: **29.12.1993**
(21) Application number: 90105384.3
(22) Date of filing: 21.03.1990
(51) Int. Cl.: F16D 67/02

(54) **Friction clutch**
Reibungskupplung
Embrayage à friction

(30) Priority: 22.03.1989 JP 71288/89
(43) Date of publication of application: 03.10.1990
(73) Proprietor: KUBOTA CORPORATION, Naniwa-ku Osaka (JP)
(72) Inventor: Ushiro, Kenzo, c/o Kubota Ltd., Sakai-shi, Osaka (JP)
(74) Representative: Patentanwälte Dr. Solf & Zapf

(56) References cited:
- US-A- 3 915 269
- US-A- 4 751 989

## Description

### TECHNICAL FIELD

The present invention relates to a friction clutch of the kind defined by the pre-characterizing features of claim 1.

### BACKGROUND OF THE INVENTION

A friction clutch of the kind in question is known from the US-A-4 751 989. The friction brake means of this known friction clutch comprises a friction plate which is movable along the axial direction but fixed along the circumferential direction and a brake plate which can press the friction plate against the axial end surface of the driven member of the clutch. This construction is large sized resulting in a large clutch.

A further friction clutch is disclosed in the Japanese Utility Publication KoKai No. 62-86 421.

This friction clutch is disposed between a first shaft and a second shaft supported by a housing and comprises a clutch case mounted on the first shaft, a first friction disk unit having a plurality of friction disks, a holder mounted on the second shaft and including a second friction disk unit having a plurality of friction disks arranged between the friction disks of the first friction disk unit, a shift member axially slidable in a clutch engaging direction and a clutch disengaging direction, compression springs extending axially with one end thereof contacting the holder and the other end contacting the shift member to urge the first and second friction disk units into pressure contact with each other, and a friction braking device for braking the second, driven shaft at a declutching time.

According to this prior construction, when the clutch is disengaged, the holder is contacted laterally by a stationary disk-like member in order to completely break power transmission, that is to prevent power transmission between the first and second friction disk units due, for example, to the viscosity of lubricating oil present therebetween.

However, this construction requires the stationary disk-like member to have a large size extending from the shift member to the holder for laterally contacting the holder with a declutching operation. This tends to result in a large clutch. In addition, since the disk-like member laterally contacts the holder, i.e. contacts one face of the holder, to apply a braking force, the clutch case may not be sufficiently braked when in high-speed rotation. Thus, there is room for improvement.

### SUMMARY OF THE INVENTION

An object of the present invention is to provide a friction clutch of the kind defined by the precharacterizing features of claim 1 including a compact braking device capable of breaking power transmission reliably at a declutching time.

The above object is fulfilled by the characterizing features of claim 1.

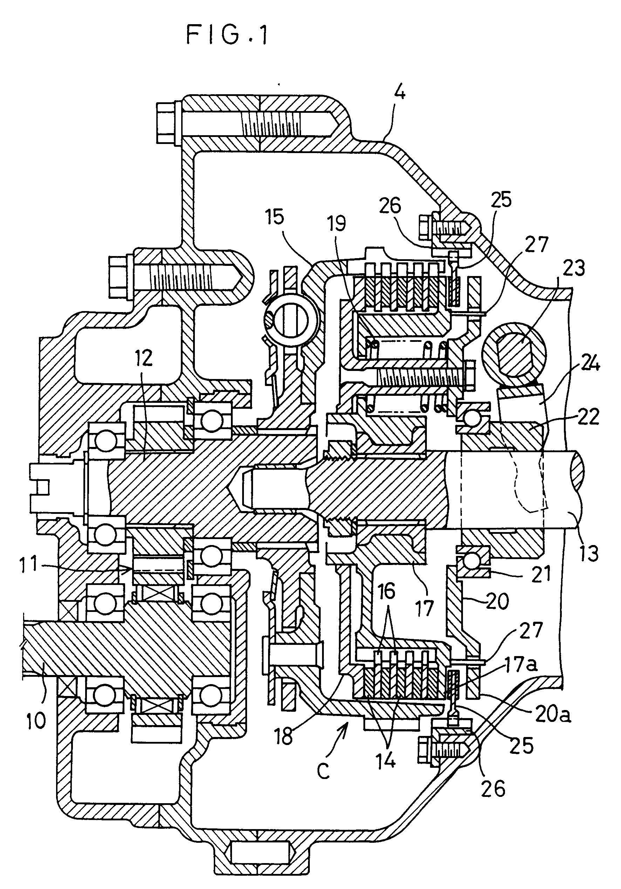

The manner in which this friction clutch operates will be described with reference to Fig. 1 for expediency, but it should be noted that the present invention is not limited to the construction shown therein.

As seen from Fig. 1, a shift member 20, which is operated whenever the clutch is disengaged, includes an extension 20a which sandwiches a friction member 25 with a holder 17. Consequently, the friction member 25 applies a braking force to a second shaft 13 through two faces of the friction member 25, the shift member 20 and holder 17.

According to this construction, the braking device includes the extension 20a of the shift member 20, and the friction member 25. Unlike the known construction noted hereinbefore, this construction does not require a large disk-like member. Moreover, according to this construction, when the shift member 20 is operated by a certain operating force, a pressure equal to this operating force is applied to the opposite faces of the friction member 20 through the extension 20a of the shift member 20 and the holder 17. As a result, this construction provides a braking force twice the force provided by the known construction.

Thus, the present invention provides a compact braking device capable of applying a strong braking force to break power transmission in a reliable way when the friction clutch is disengaged.

The foregoing and other objects, features and advantages of the invention will be apparent from the following more particular description of a preferred embodiment of the invention, as illustrated in the accompanying drawings.

### BRIEF DESCRIPTION OF THE DRAWINGS

The drawings show a friction clutch according to the present invention, in which:-
Fig. 1 is a sectional view of the friction clutch,
Fig. 2 is a side elevation of an agricultural tractor,
Fig. 3 is a sectional view of friction disks in a braking state,
Fig. 4 is view schematically showing engagement between a friction disk and a holder, and
Fig. 5 is a sectional view schematically showing arrangement of a sound suppressing case.

### DESCRIPTION OF THE PREFERRED EMBODIMENT

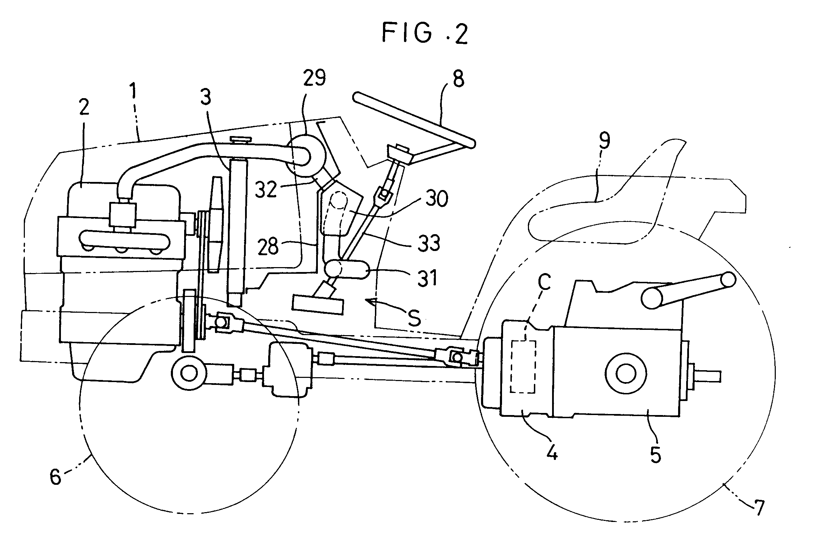

Referring to Fig. 2, an agricultural tractor comprises a hood 1 provided at the front of a vehicle body for enclosing an engine 2 and a radiator 3. The tractor has a propelling system including to a main clutch housing 4 and a transmission case 5 which receive power from the engine 1 and which are interconnected. The power is output in plural speeds from the transmission case 5 for transmission to front and rear wheels 6 and 7. The tractor further comprises a steering wheel 8 mounted centrally of the vehicle body, and a driver's seat 9.

Referring to Fig. 1, the main clutch housing 4 contains a multidisk friction clutch C mounted between a first shaft 12 and a second shaft 13 coaxial with each other. The first shaft 12 receives power from an input shaft 10 through a transmission gearing 11, and the second shaft 13 transmits the power to the transmission case 5. The first shaft 12 carries a clutch case 15 opening rearwardly and having a plurality of first friction disks 14. The second shaft 13 carries a holder 17 splined thereto and having a plurality of second friction disks 16 each disposed between an adjacent pair of friction disks 14. The holder 17 defines a pressure contact portion 17a which cooperates with a pressing member 18 slidably mounted on the holder 17 to place the friction disks 14 and 16 in pressure contact with one another. Compression springs 19 are provided between the holder 17 and pressing member 18, reaction points of the springs 19 on the pressing member 18 being provided by a shift member 20. A sleeve 22 is mounted on the second shaft 13 and operatively connected to the shift member 20 through a release bearing 21. The sleeve 22 is controllable by a control arm 24 mounted on a control shaft 23. When the control arm 24 is not operated, the compression springs 19 cause the friction disks 14 and 16 to be sandwiched under pressure between the pressure contact portion 17a and pressing member 18, thereby transmitting the power from the first shaft 12 to the second shaft 13. When the control arm 24 is operated, an operating force is transmitted from the sleeve 22 through the release bearing 21 to the shift member 20 to push the shift member 20 against the force of springs 19. As a result, the pressing member 18 is shifted away from the pressure contact portion 17a, thereby breaking the power transmission from the first shaft 12 to the second shaft 13.

This clutch C includes a braking device for braking the second shaft 13 when the clutch C is disengaged, to prevent the second shaft 13 from rotating with the power transmitted thereto due, for example, to the viscosity of lubricating oil present between the friction disks 14 and 16.

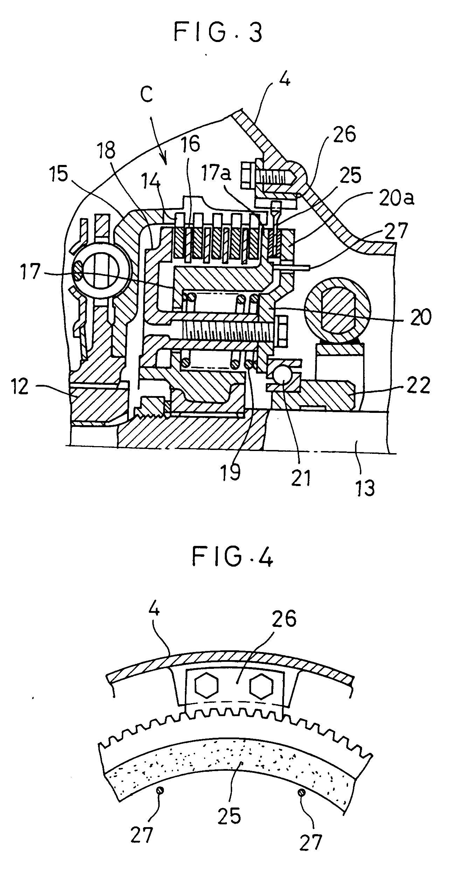

As shown in Figs. 3 and 4, the shift member 20 defines an extension 20a situated outwardly of abutting positions of the compression springs 19. An annular friction member 25 is interposed between the extension 20a and an outer face of the pressure contact portion 17a of holder 17. The friction member 25 is locked against rotation by a support 26 mounted on an inside wall of the main clutch housing 4.

When the clutch C is disengaged, the extension 20a is movable toward the holder 17 to sandwich the friction member 25 between the extension 20a and the outer face of the pressure contact portion 17. Consequently, the holder 17 is stopped rotating, which stops rotation of the second shaft 13.

This braking device includes a plurality of pins 27 projecting from the holder 17 to maintain the friction member 25 in position.

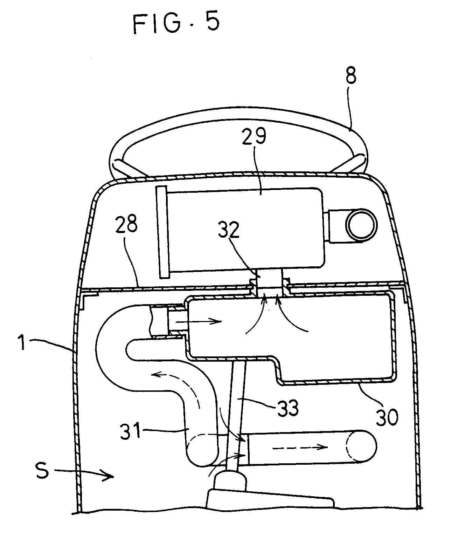

Referring to Figs. 4 and 5, the agricultural tractor further comprises a sound insulating plate 28 disposed in a rear region of the hood 1. An air cleaner 29 is disposed forwardly of the sound insulating plate 28, to share the inside space of the hood 1 with the engine 2, and a noise suppressing case 30 is disposed opposite the air cleaner 29 across the sound insulating plate 28. The sound suppressing case 30 receives air from a rear space S of the hood 1 through a bent pipe 31, and feeds the air to the air cleaner 29 through an intermediate pipe 32.

The sound suppressing case 30 has a hollow interior. Rearwardly of the sound suppressing case 30 is a steering shaft 33.

## Claims

1. A friction clutch disposed between a first shaft (12) and a second shaft (13) supported by a housing (4) comprising:
a clutch case (15) including a plurality of first friction disks (14),
a holder (17) including a plurality of second friction disks (16) arranged between said first friction disks (14),
shift means (20) axially slidable in a clutch engaging direction and a clutch disengaging direction,
compression springs (19) extending axially with one end thereof contacting said holder (17) and the other end contacting said shift means (20) to urge said first and second friction disks (14, 16) into pressure contact with each other and
axially slidable friction brake means (25) disposed between said holder (17) and said clutch case (15),
characterized in that,
said clutch case (15) is mounted on said first shaft (12) and said holder (17) is mounted on said second shaft (13) and
said holder (17) defines a pressure contact portion (17a) extending radially from said holder (17) and said shift means (20) defines an extension (20a) extending radially from said shift means (20), said friction brake means (25) being interposed between said extension (20a) and said pressure contact portion (17a) so that it is sandwiched between said extension (20a) and said pressure contact portion (17a) when said shift means (20) moves to the declutching position.

2. A friction clutch as claimed in claim 1, wherein said friction braking means (25) is in form of an annular plate having a peripheral edge connected to said housing (4).

3. A friction clutch as claimed in claim 2, wherein said friction braking means (25) is connected to said housing (4) through axial splines to be movable axially.

4. A friction clutch as claimed in claim 3, wherein said clutch case (15) is bowl-shaped opening toward said second shaft (13), said holder (17), said compression springs (19) and said shift means (20) being contained substantially in an interior space of said clutch case (15).

## Patentansprüche

1. Reibkupplung, die zwischen einer ersten Welle (12) und einer zweiten Welle (13) angeordnet ist, die durch ein Gehäuse (4) getragen sind, mit:
einem Kupplungsgehäuse (15), das eine Mehrzahl von ersten Reibscheiben (14) umfaßt,
einem Halter (17), der eine Mehrzahl von zweiten Reibscheiben (16) umfaßt, die zwischen den ersten Reibscheiben (14) angeordnet sind,
einer Verstelleinrichtung (20), die in eine Kupplungseinrückrichtung und eine Kupplungsausrückrichtung axial gleitbewegbar ist,
Druckfedern (19), die sich axial erstrecken, wobei ein Ende der Federn in Kontakt mit dem Halter (17) und das andere Ende in Kontakt mit der Verstelleinrichtung (20) steht, um die ersten und zweiten Reibscheiben (14, 16) in Druckkontakt miteinander zu drängen und
einer axial verschiebbaren Reibbremseneinrichtung (20), die zwischen dem Halter (17) und dem Kupplungsgehäuse (15) angeordnet ist,
**dadurch gekennzeichnet,**
daß das Kupplungsgehäuse (15) an der ersten Welle (12) und der Halter (17) an der zweiten Welle (13) angebracht ist und
der Halter (17) einen Druckkontaktabschnitt (17a) festlegt, der sich radial von dem Halter (17) erstreckt, und die Verstelleinrichtung (20) eine Verlängerung (20a) festlegt, die sich radial von der Verstelleinrichtung (20) erstreckt, wobei die Reibbremseneinrichtung (25) zwischen der Verlängerung (20a) und dem Druckkontaktabschnitt (17a) so angeordnet ist, daß sie zwischen der Verlängerung (20a) und dem Druckkontaktabschnitt (17a) in Sandwich-Bauart zu liegen kommt, wenn sich die Verstelleinrichtung (20) in die Ausrückstellung bewegt.

2. Reibkupplung nach Anspruch 1, wobei die Reibbremseinrichtung (25) in Form einer ringformigen Platte vorliegt, die eine mit dem Gehäuse (4) verbundene Umfangskante aufweist.

3. Reibkupplung nach Anspruch 2, wobei die Reibbremseinrichtung (25) zur axialen Beweglichkeit mit dem Gehäuse (4) über axiale Keilwellennuten verbunden ist.

4. Reibkupplung nach Anspruch 3, wobei das Kupplungsgehäuse (15) eine sich zur zweiten Welle (13) öffnende Schalenform aufweist, wobei der Halter (17), die Druckfedern (19) und die Verstelleinrichtung (20) im wesentlichen im Innenraum des Kupplungsgehäuses (15) enthalten sind.

## Revendications

1. Embrayage à friction, disposé entre un premier arbre (12) et un second arbre (13) supportés par un boîtier (4) comprenant :
un carter (15) d'embrayage comprenant plusieurs premiers disques (14) de friction,
un support (17) comprenant plusieurs second disques (16) de friction placés entre les premiers disques (14) de friction,
un dispositif (20) de déplacement qui peut coulisser axialement dans un sens d'embrayage et un sens de débrayage,
des ressorts de compression (19) disposés axialement de manière qu'une première extrémité soit au contact du support (17) et l'autre extrémité au contact du dispositif (20) de déplacement, et que les premiers et les seconds disques (14, 16) de friction soient en contact mutuel sous pression, et
un dispositif (25) à frein à friction, qui peut coulisser axialement et qui est disposé entre le support (17) et le carter d'embrayage (15),
caractérisé en ce que
le carter (15) d'embrayage est monté sur le premier arbre (12) et le support (17) est monté sur le second arbre (13), et
le support (17) forme une partie (17a) de contact sous pression dépassant radialement du support (17) et le dispositif (20) de déplacement forme un prolongement (20a) dépassant radialement du dispositif (20) de déplacement, le dispositif (25) à frein à friction étant placé entre le prolongement (20a) et la partie (17a) de contact sous pression afin qu'il soit placé entre le prolongement (20a) et la partie (17a) de contact sous pression lorsque le dispositif (20) de déplacement se déplace vers la position de débrayage.

2. Embrayage à friction selon la revendication 1, dans lequel le dispositif (25) à frein à friction est sous forme d'un plateau annulaire ayant un bord périphérique raccordé au boîtier (4).

3. Embrayage à friction selon la revendication 2, dans lequel le dispositif (25) à frein à friction est raccordé au boîtier (4) par des cannelures axiales afin qu'il soit mobile axialement.

4. Embrayage à friction selon la revendication 3, dans lequel le carter (15) d'embrayage a une forme de cuvette débouchant vers le second arbre (13), le support (17), les ressorts de compression (19) et le dispositif de déplacement (20) étant logés pratiquement dans l'espace du carter d'embrayage (15).
